# EUROPEAN PATENT SPECIFICATION

(11) **EP 0 754 579 B1**
(45) Date of publication and mention of the grant of the patent: **10.09.2003**
(21) Application number: 96111619.1
(22) Date of filing: 18.07.1996
(51) Int. Cl.: B60H 1/00, B60H 1/32, F28D 1/04

(54) **Heat exchanging apparatus for a vehicle**
Fahrzeugwärmetauscher
Appareil d'échange de chaleur pour véhicule automobile

(30) Priority: 20.07.1995 JP 18425295
(43) Date of publication of application: 22.01.1997
(73) Proprietor: DENSO CORPORATION, Kariya-City Aichi-Pref. 448 (JP)
(72) Inventor: Sanada, Ryouichi, Kariya-city, Aichi-pref. 448 (JP); Tsuzuki, Kaoru, Kariya-city, Aichi-pref. 448 (JP)
(74) Representative: Klingseisen, Franz, Dipl.-Ing.

(56) References cited:
- EP-A- 0 414 433
- EP-A- 0 431 917
- EP-A- 0 677 716
- US-A- 5 046 554
- US-A- 5 146 767
- US-A- 5 269 367
- US-A- 5 429 181

## Description

The invention relates to a heat exchanging apparatus for a vehicle according to the preamble of claim 1.

US-A-5,046,554 discloses such a heat exchanging apparatus, wherein each of a pair of heat exchangers, such as a radiator and a condenser, includes a tubular structure dividing a fluid flow path between an inlet manifold and an outlet manifold. The heat exchangers reside in juxtaposition for a unit with the respective fluid flow path being congruently alined along the axis of the stream of cooling medium passing therethrough. The heat exchangers are sealingly encased within a shroud for directing the steam of cooling medium through the tubular structures.

Conventionally, as disclosed in JP-U-4-35017, when a radiator for cooling an engine and a condenser of a refrigerating cycle are mounted on a vehicle, the condenser is generally disposed on an upstream air side of the radiator, because temperature of the cooling water in the radiator is higher than that of the refrigerant in the condenser.

In such a case, as a cooling fan for blowing air toward the radiator and the condenser, there have been a suction type cooling fan disposed on a downstream air side of the radiator and an forced draft type fan disposed on a downstream air side of the condenser.

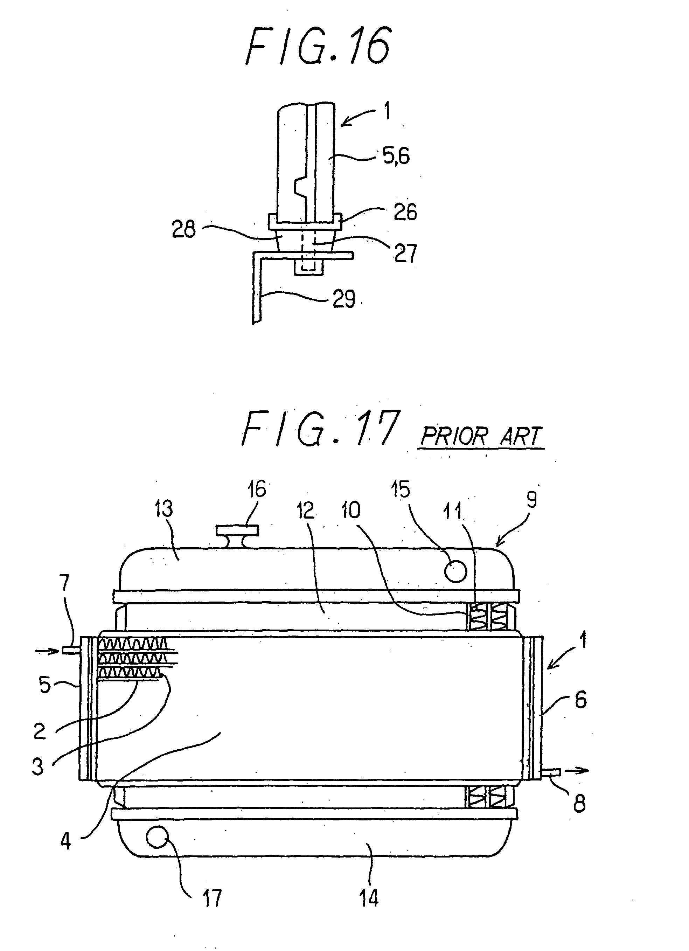

By the way, in recent years, a multi-flow type condenser 1 shown in FIG. 17 has been often used in view of the high capacity. The multi-flow type condenser 1 includes a core portion 4 for heat exchange, in which plural tubes 2 are horizontally disposed in parallel and plural corrugated fins 3 are disposed between the adjacent tubes, and a first and a second header tanks 5 and 6 disposed vertically at each end of the tubes 2 so as to communicate with the tubes 2. The first header tank 5 is provided with an inlet 7 of the refrigerant, and the second header tank 6 is provided with an outlet 8 of the refrigerant.

In FIG. 17, the condenser 1 is disposed on a upstream air side of the radiator for cooling engine, and a cooling fan (not shown) is disposed on a downstream air side of the radiator 9. The blowing air, after having passed through the condenser 1, passes through the radiator 9.

The radiator 9 includes a core portion 12 for heat exchange, in which plural tubes 10 are disposed perpendicularly in parallel, and an upper tank and a lower tank 13 and 14 are disposed horizontally at each end of the tube 10. The upper tank 13 is provided with an inlet 15 of the engine cooling water, and the lower tank 14 is provided with an outlet 17 of the engine coolant.

In the case where the multi-flow type condenser 1 is used, the first and second header tanks 5 and 6 portions are generally positioned outside the core portion 12 of the radiator 9 in view of the mounting performance on the vehicle, etc.

Accordingly, when the introduction of the cooling air, performed by the wind during the running of the vehicle, is not expected, e.g., at the stop of the vehicle, the blowing air of the cooling fan only passes through the core portion 4 of the condenser 1 and almost does not pass through the first and second header tanks 5 and 6. Therefore, the radiating function is not obtained in the first and second header tanks 5 and 6 sufficiently.

### SUMMARY OF THE INVENTION

In view of the above problem, it is an object of the present invention to provide a heat exchanging apparatus for a vehicle, in which a multi-flow type condenser and a radiator for cooling an engine are cooled by a common suction type cooling fan, capable of performing a radiating function of the refrigerant effectively.

This object is achieved by the features in the characterizing part of claim 1.

According to the above structure, the blowing air flows through substantially an entire outer surface of at least one of the first header tank and the second header tank. Therefore, in the condenser, the heat exchange between the cooling air and the refrigerant is positively performed not only in the core portion but also in the header tank, and the radiating amount of the refrigerant is increased.

Further, the gas-liquid separator is disposed in addition to the header tank so as to perform heat exchange with the blowing air of the suction type cooling fan. In this way, the heat exchange between the cooling air and the refrigerant can be performed in the core portion, the header tank and the gas-liquid separator, and the radiating amount of the refrigerant is further increased.

Still further, the header tank may be made of material having a high coefficient of thermal conductivity, which is an identical type as that of the core portion. In this way, the radiating refrigerant in the header is increased.

### BRIEF DESCRIPTION OF THE DRAWINGS

Additional objects and advantages of the present invention will be more readily apparent from the following detailed description of preferred embodiments thereof when taken together with the accompanying drawings in which;
FIG. 1 is a front view of a first embodiment; this first embodiment is useful for understanding the invention according to Figs. 4 and following figures;
FIG. 2 is a plan view showing the installation layout in the engine compartment of the vehicle in the first embodiment;
FIG. 3 is a Mollier chart of the refrigerating cycle equipped with a condenser in the first embodiment;
FIG. 4 is a front view of a condenser integrally provided with a receiver and a supercooling portion of a second embodiment representing the invention;
FIG. 5 is a plan view showing the installation layout in the engine compartment of the vehicle in the second embodiment;
FIG. 6 is a schematic explanation view showing the flow route of the refrigerant;
FIG. 7 is an exploded perspective view of the main portions of the condenser in the second embodiment;
FIG. 8 is a Mollier chart of the refrigerating cycle equipped with the condenser in the second embodiment;
FIG. 9 is a plan view showing the installation layout in the engine compartment of the vehicle in the third embodiment;
FIG. 10 is a front view showing an installation state of a radiator and a shroud used in the present invention;
FIG. 11 is a front view showing an installation state of radiators and shrouds in the present invention;
FIG. 12 is a partial cross sectional side view of FIG. 11;
FIG. 13 is a side view showing an installation state of a radiator and a vehicle side;
FIG. 14 is a side view showing an installation state of a radiator and a condenser;
FIG. 15 is a front view of FIG. 13;
FIG. 16 is an enlarged view of C portion of FIG. 14; and
FIG. 17 is a front view showing an installation state of a radiator and a condenser in the conventional apparatus.

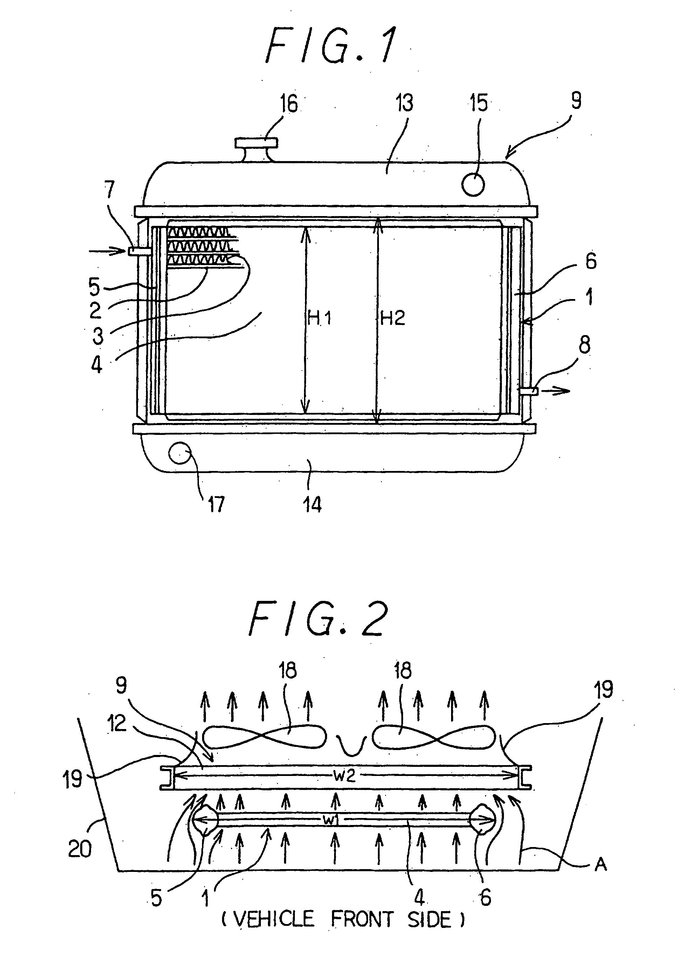

A first embodiment useful for understanding the invention will be described with reference to FIGS. 1 to 3, in which the identical or equivalent portions are shown with the same reference numerals as in FIG. 17.

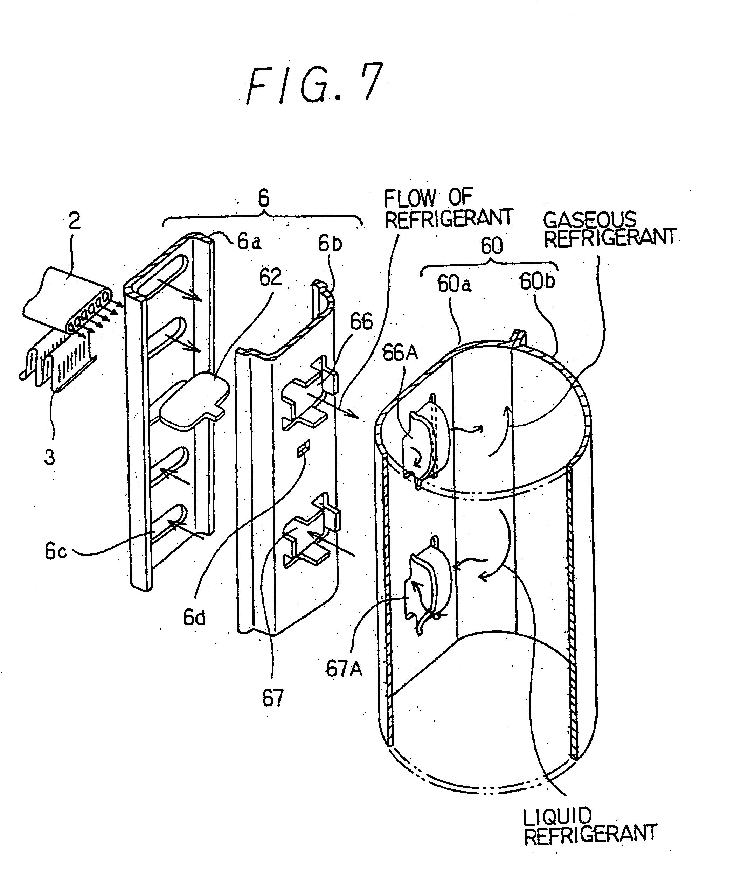

In FIG. 1, the condenser 1 is a refrigerant condenser of the refrigerating cycle for an air conditioner of the vehicle and is of a multi-flow type. Each tube 2 of the condenser 1 is composed of a multi-hole flat tube (FIG. 7) formed by extruding from a aluminum material (specifically, DA1197), and zinc is thermally sprayed on an outer surface thereof.

Each corrugated fin 3 is composed of a laminated material in which a brazing material (specifically, A4343) is claded on each side of an aluminum core material (specifically, A3103). The condenser 1, after assembled temporarily, is integrally brazed in a heating furnace, thereby being assembled.

As shown in FIG. 2, when the condenser 1 is disposed on an upstream air side (vehicle front side) of the radiator 9 for cooling the engine, a width dimension W1 (an entire width including the core portion 4 and the first and second header tanks 5 and 6) is so set as to be slightly smaller than a width W2 of the core portion 12 of the radiator 9, and thereby the condenser 1 in the width direction including the first and second header tanks 5 and 6 is entirely positioned within the width direction W2 of the core portion 12 of the radiator 9.

A height H1 of the core portion 4 of the condenser 1 is also so set as to be slightly smaller than a height H2 of the core portion 12 of the radiator 9, and thereby the condenser 1 in the height direction including the core portion 4 and the first and second header tanks 5 and 6 is entirely positioned within the core portion 12 of the radiator 9.

In FIG. 2, suction type cooling fans 18 are disposed on a downstream air side (vehicle rear side) of the radiator 9. In this embodiment, these fans 18 are disposed in parallel. Each cooling fan 18 includes an axial flow fan, and is rotated by an electric motor (not shown). Each of fan shrouds 19 leads the blowing air of the cooling fans 18. A body 20 of the vehicle defines an engine compartment.

According to the first embodiment as constructed above, when the cooling air is blown along the arrow A from the vehicle front side to the vehicle rear side by the suction type cooling fans 18, the cooling air flows so as to cover not only the core portion 4 of the condenser 1 but also outside faces of the first and second header tanks 5 and 6 in the width direction (W1 direction).

As a result, in the condenser 1, the heat exchange between the cooling air and the refrigerant is performed not only in the core portion 4 but also in the first and second header tanks 5 and 6, thereby increasing the radiating amount of the refrigerant. Herein, since the header tanks 5 and 6 are formed from an aluminum having a high coefficient of thermal conductivity, which is an identical type as that of the core portion 4, it is possible to perform the heat exchange favorably in the header tanks 5 and 6.

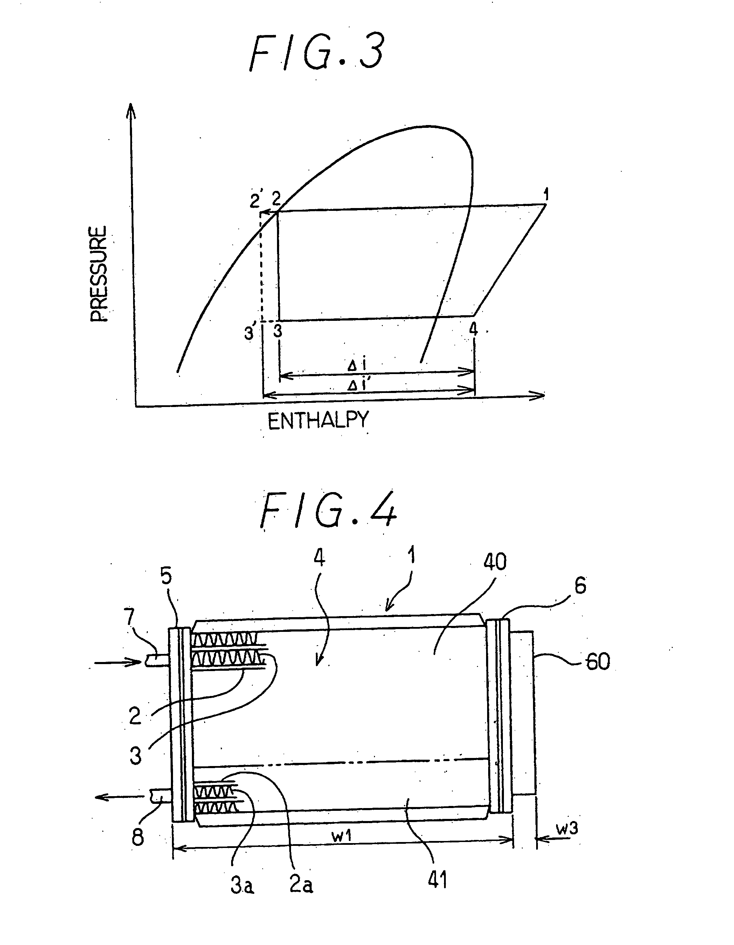

In the Mollier chart shown in FIG. 3, according to the conventional type, the refrigerating cycle is defined along 1, 2, 3, and 4, however, according to this embodiment, the refrigerating cycle is defined along 1, 2', 3', and 4', and the difference of the enthalpy between the inlet and the outlet of the evaporator of the refrigerating cycle is increased from the conventional Δi to Δi'. With the increase in the difference of the enthalpy, when the circulation amount G of the refrigerant in the cycle is identical, the cooling capacity of the evaporator can be increased as much as the difference of the enthalpy is.

A second embodiment, the present invention, is described with reference to FIGS. 4-8. In the second embodiment, the present invention is applied to the multi-flow type condenser 1, into which a supercooling portion (sub cooling portion) and a receiving portion (gas-liquid separating portion) are integrally constructed.

In the second embodiment, the refrigerant condenser 1 integrally provided with the receiving portion includes a core portion 4, a first header tank 5 vertically disposed at a side of one horizontal end of the core portion 4, a second header tank 6 vertically disposed at a side of the other horizontal end of the core portion 4, a receiving portion for receiving the refrigerant and so on. All of these components are made of aluminum and integrally manufactured by brazing.

The core portion 4 is composed of a condensing portion 40 and a supercooling portion 41. The condensing portion 40 at the upper side is composed of plural condensing tubes 2 and plural corrugate fins extending horizontally, which are joined together by brazing or the like. Similarly, the supercooling portion 41 at the lower side is composed of plural supercooling tubes 2a and plural corrugated fins 3a extending horizontally.

The condensing portion 40 functions as condensing means for condensing and liquefying the gaseous refrigerant discharged from the compressor (not shown) of the refrigerating cycle by heat exchange with the blowing air of the cooling fan 18. The supercooling portion 41 is disposed below and adjacent to the condensing portion 40, and functions as supercooling means for supercooling the liquid refrigerant led out from the receiving portion 60 described later by heat exchange with blowing air.

The receiving portion is formed substantially in a cylindrical shape, which is adjacent to the second header tank 6 and vertically extends integrally therewith, and functions as a receiver (gas-liquid separator) which gas-liquid separates the refrigerant flowing thereto from the outlet portion of the condensing portion 40 into gaseous refrigerant and liquid refrigerant, and thereafter leads out only liquid refrigerant to the supercooling portion 41. In the receiving portion 60, the drying agent (not shown) for absorbing the moisture in the refrigerant may be built in.

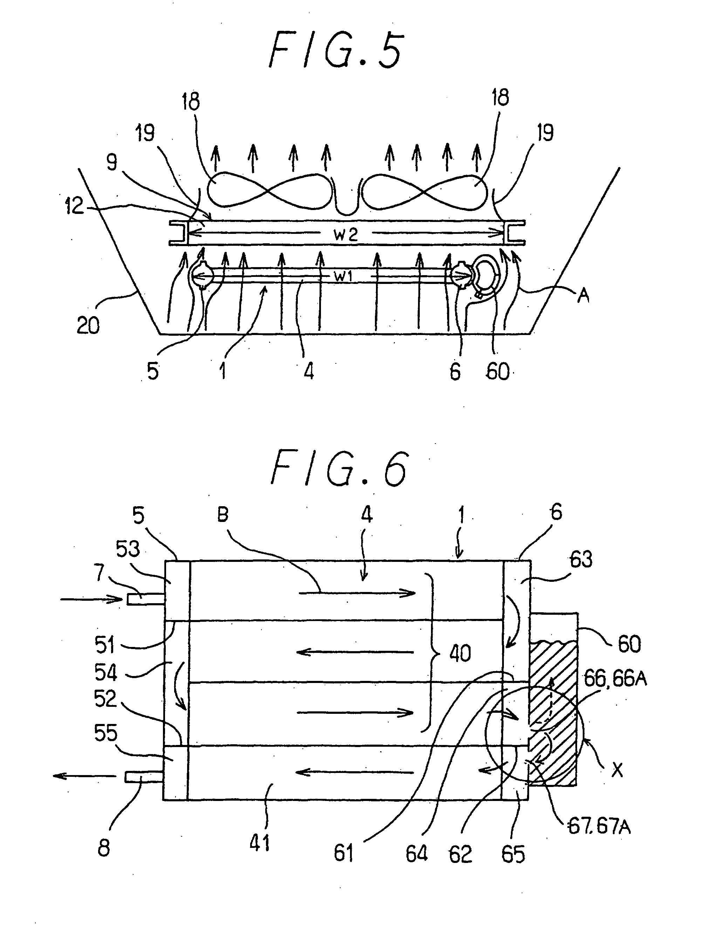

The first header tank 5 5 is formed in a cylindrical shape extending vertically, and an interior space thereof is partitioned into three spaces 53, 54 and 55 by two partition plates 51 and 52 shown in FIG. 6. To the upper space 53 is connected a refrigerant inlet 7 into which the gaseous refrigerant from the compressor (not shown) of the refrigerating cycle flows.

Further, with the upper space 53 is communicated each one end of the upper. tubes 2 among plural condensing tubes 2, constituting the condensing portion 40, and with the lower space 55 are communicated each one end of plural supercooling tubes 2a constituting the supercooling portion 41 and a refrigerant outlet 8 through which the supercooled liquid refrigerant is led out.

With the intermediate space 54 of the first header tank 5 is communicated each one end of the intermediate and lower tubes 2 2 among plural condensing tubes 2 constituting the condensing portion 40.

On the other hand, the second header tank 6 is formed substantially in a cylindrical shape extending vertically, and an interior space thereof is vertically partitioned into three spaces 63, 64 and 65 by two partition plates 61 and 62 shown in FIG. 6. In this embodiment, the second header tank 6 is constructed by connecting two plates 6a and 6b shown in FIG. 7. One plate 6a is provided with tube insertion holes 6c through which end portions of tube 2 and 2a are inserted.

The other plate 6b is provided with a temporary fixing hole 6d of the partition plates 61 and 62, and the refrigerant inlet hole 66 and the refrigerant outlet hole 67, which will be described later, are provided above and below the hole 6d, respectively.

With the upper space 63 is communicated each one end of the intermediate and lower tubes 2 among plural condensing tubes 2 constituting the condensing portion 40.

With the intermediate space 64 each one end of the lower tubes 2 among plural condensing tubes 2 constituting the condensing portion 40, and the intermediate space 64 communicates with the space in the receiving portion 60 through the refrigerant inlet 66 and 66A. With the lower space 65 of the second header tank 6 is communicated each one end of the supercooling tubes 2 constituting supercooling portion 41, and the lower space 65 communicates with a lower side space (space where the liquid refrigerant is filled) in the receiving portion 60 through the refrigerant outlets 67 and 67A positioned lower than the refrigerant inlets 66 and 66A.

In the embodiment shown in FIG. 7, the receiving portion 60 is made of an identical material as the header tanks 5 and 6, and is formed substantially in a cylindrical shape, which extends vertically, by joining two plates 60a and 60b, The receiving portion 60 is integrally joined with a plate 6b portion of the second header tank 6. The refrigerant inlet 66A and the refrigerant outlet 67A are formed on the plate 60a of the receiving portion 60 at positions corresponding to the refrigerant inlet 66 and the refrigerant outlet 67A, respectively. Portions between the refrigerant inlets 66 and 66A and between the refrigerant outlets 67 and 67A are airtightly joined by brazing, respectively.

Each of upper and lower end faces of the receiving portion 60 and the header tanks 5 and 6 is sealed by a cap member (refer to a cap member 26 in FIG. 16).

According to the structure as described above, in the condenser 1 of this embodiment, the refrigerant flows along the route of the arrow B shown in FIG. 6.

In this embodiment, as shown in FIG. 5, the receiving portion 60 is also positioned within the core portion 12 of the radiator 9, and the condenser 1 is disposed on an upstream air side of the radiator 9. That is, in this embodiment, the total width dimension of the width dimension W1 (the entire width including the core portion 4 and the first and second header tanks 5 and 6) and the width dimension W3 of the receiving portion 60 (FIG. 4) is so set to be slightly smaller than the width W2 of the core portion 12 of the radiator 9 that the condenser 1 in the width direction including the first and second header tanks 5 and 6 and the receiving 60 is entirely positioned within the width W2 of the core portion 12 of the radiator 9.

Next, an operation according to the above structure will be described. The gaseous refrigerant discharged from the. compressor (not shown) flows into the first header tank 5 through the refrigerant inlet 7 of the condenser 1 and makes a U-turn in the condensing portion 40 along the route of the arrow B shown in FIG. 6.

During this operation, the refrigerant is cooled by heat exchange with the cooling air A and becomes saturated liquid including gaseous liquid partially. The saturated liquid refrigerant passes through the refrigerant inlet 66 and 66A from the intermediate space 64 of the second header tank 6 and flows into the receiving portion 60. Herein, the gaseous refrigerant rises by its buoyant, whereas the liquid refrigerant falls by its gravity, thereby. the gas-liquid refrigerant being separated.

Only the liquid refrigerant flows into the lower space 65 through the refrigerant outlet 67 and 67A, and further flows into the supercooling portion 41 therefrom.

In the supercooling portion 41, the liquid refrigerant becomes a supercooling state by being cooled again, and such supercooled liquid refrigerant flows through the lower space 55 of the first header tank 5 and further flows out of the condenser 1 from the refrigerant outlet 8.

In the second embodiment, as shown in FIG. 5, since the condenser 1 including the receiving portion 60 in addition to the first and second header tanks 5 and 6 in the width direction is entirely positioned within the width W2 of the core portion 12 of the radiator 9, the cooling air A of the cooling fans 18 flows so as to cover not only the core portion 4 of the condenser 1 and the first and second header tank 5 and 6 but also the outside faces of the receiving portion 60 in the width direction (W1 direction).

As a result, in the condenser 1, the heat exchange between the cooling air and the refrigerant can be positively performed in the first and second header tanks 5 and 6 in addition to the core portion 4. Especially, since the considerable amount of the liquid refrigerant is filled in the receiving portion 60, the radiating amount of the refrigerant is effectively increased by compulsorily cooling the receiving portion 60 with the cooling air A of the cooling fans 18.

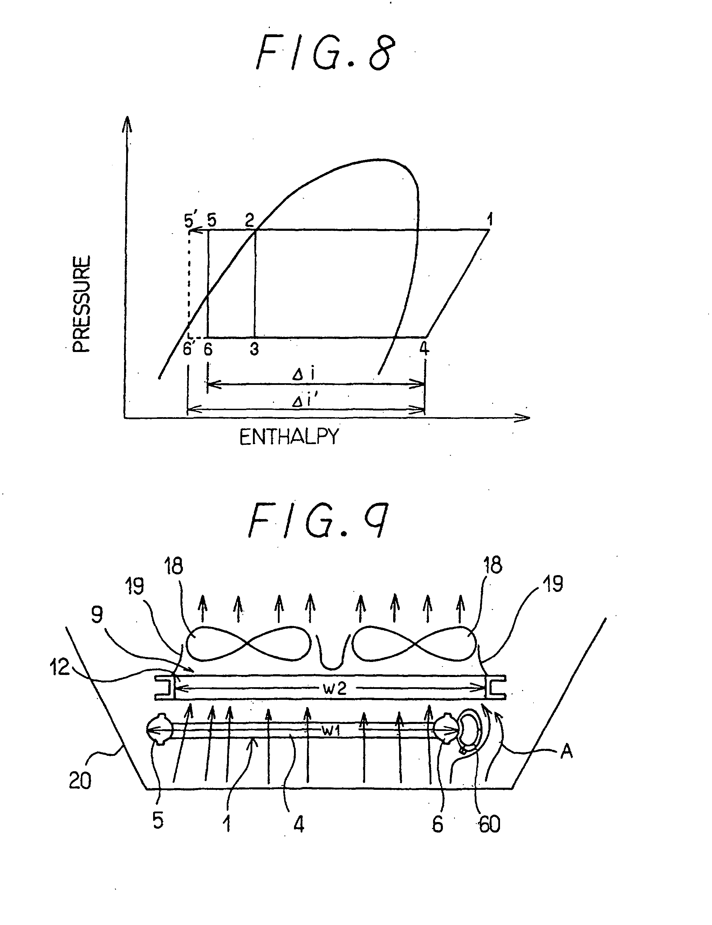

Accordingly, as shown in the Mollier chart in FIG. 8, according to the conventional type, the refrigerating cycle is defined along 1, 5, 6 and 4, however, according to the second embodiment, the cycle is defined along 1, 5', 6' and 4, and the difference of the enthalpy between the inlet and the outlet of the evaporator of the refrigerating cycle is increased from the conventional Δi to Δi'. With the increase in the difference of the enthalpy, when the circulation amount G of the refrigerant in the cycle is identical, the cooling capacity of the evaporator can be increased as much as the difference of the enthalpy is.

A third embodiment of the present invention will be described with reference to FIG. 9. In the second embodiment, the condenser 1 including the receiving portion 60 in addition to the first and second header tanks 5 and 6 in the width direction is entirely positioned within the width W2 of the core portion 12 of the radiator 9, however, in the third embodiment, the receiving portion 60 is disposed within the width W2 of the core portion 12 of the radiator 9 in addition to the core portion 4 of the condenser 1 and the second header tank 6, and the first header tank 5 is disposed at a position shifted laterally from the width W2 of the core portion 12 of the radiator 9.

According to the third embodiment, the radiating function by the compulsory blowing air toward the first header tank 5 cannot be obtained, however, since the radiating function by the compulsory blowing air toward the second header tank 6 and the receiving portion 60 can be still obtained, the capacity of the condenser 1 can be improved by such radiating function.

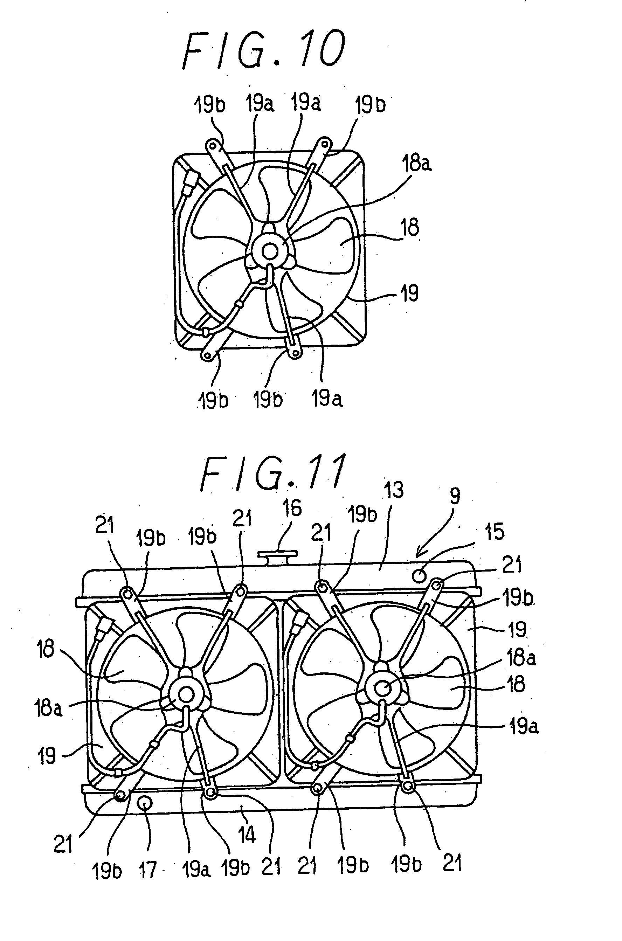

Next, an assembled structure in the above first to third embodiments will be described with reference to FIGS. 10-16. In FIG. 10, an assembled structure of a cooling fan 18 and a resin fan shroud 19 is shown. The cooling fan 18 is installed to a rotating shaft of a driving motor 18a, and a housing portion of the driving motor 18a is supported to the fan shroud by plural stays 19a (four stays are shown in FIG. 10).

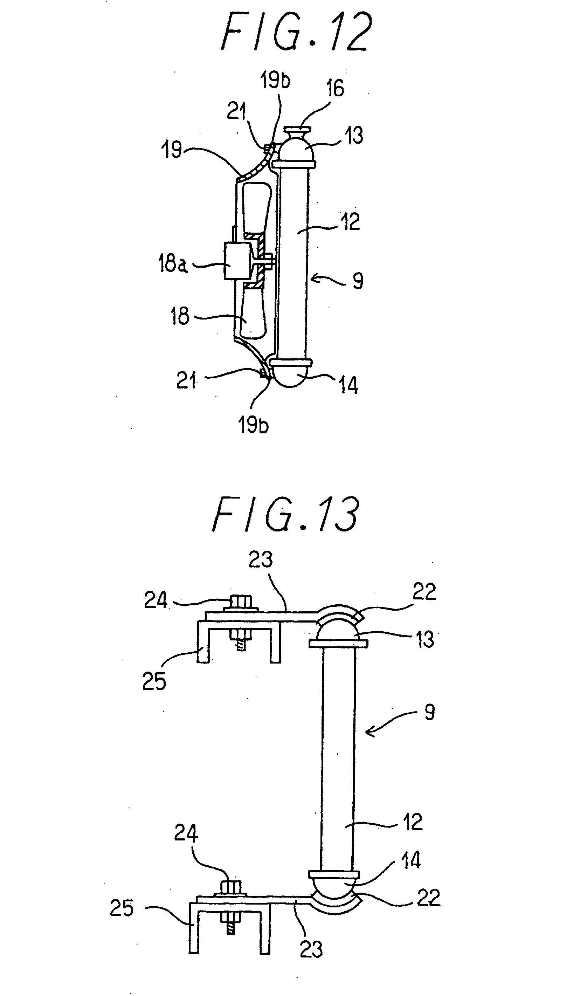

In FIGS. 11 and 12, an installation state of the fan shroud 19 to the radiator 9 is shown, and bracket portions 19b integrally formed with the fan shroud 19 are fixedly screwed to the upper and lower tanks 13 and 14 with bolts 21.

In FIG. 13, an installation structure of the radiator 9 to the vehicle is shown, rubber cushion mounting members 22 are disposed at each of the upper and lower tanks 13 and 14. Brackets 23 are provided to support the radiator 9 with the rubber cushion mounting members 22 therebetween.

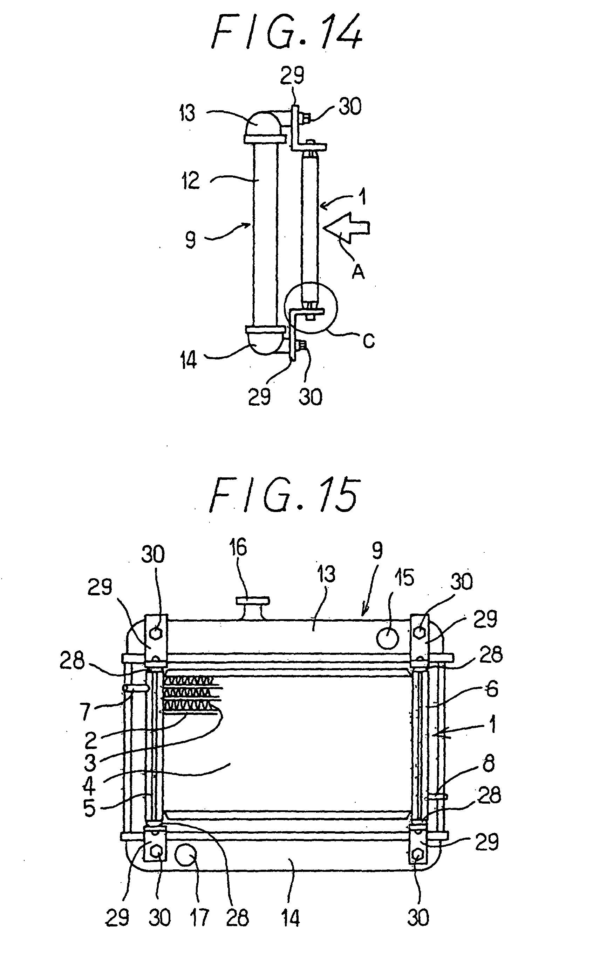

In FIGS. 14-16, an assembled structure of the condenser 1 and the radiator 9 is described. In the installation structure shown in FIG. 16, the condenser 1 is assembled to the radiator 1 at up-down and left-right four positions. Pins 27 extending in an up-down (longitudinal) direction of the header tanks 5 and 6 are integrally provided to cap members 26 (end plates) provided on each of the upper and lower end portions of the header tanks 5 and 6. A ring-shaped rubber bush 28 is fitted onto each pin 27, and each of the upper and lower end portions of the header tanks 5 and 6 are supported by brackets 29 with the rubber bushes 28 therebetween. The brackets 29 are fixedly screwed to the lower and upper tanks 13 and 14 of the radiator 9 with bolts 30.

An installation layout of the condenser 1 and the radiator 9 shown in FIG. 15 is directed to the first embodiment.

In the above-described embodiments, the core portion 4 in the condenser 1 employs the structure of the corrugated fins 3, however, the other structure, for example, plate fins are inserted to tubes 2, may be employed to the present invention.

## Claims

1. A heat exchanging apparatus for a vehicle having a water-cooled engine, comprising;
a radiator (9) including a core portion (12) for cooling the cooling water,
a suction type cooling fan (18) disposed on a downstream air side of said radiator (9) for blowing air toward said radiator (9); and
a condenser (1) disposed on an upstream air side of said radiator (9) for condensing gaseous refrigerant, discharged from a compressor of a refrigerating cycle,
said condenser (1) including:
a core portion (4) composed of plural tubes (2) disposed in parallel with each other and a fin (3) disposed between adjacent said tubes;
a first header tank (5) communicating with each one end of said tubes (2); and
a second header tank (6) communicating with each the other end of said tubes (2),
wherein said suction type cooling fan (18) and said condenser (1) are positioned relatively in such a manner that the blowing air from said suction type cooling fan (18) flows through substantially an entire outer surface of at least one of said first header tank (5) and said second header tank (6) and through said core portion (4), **characterised in that**
a gas-liquid separator (60) disposed adjacent to one of said first header tank (5) and said second header tank (6), said separator (60) receiving the refrigerant condensed in said condenser (1), separating such condensed refrigerant into liquid refrigerant and gaseous refrigerant, leading out only said liquid refrigerant,
wherein said first header tank (5) and said second header tank (6) are disposed in such a manner that longitudinal directions thereof extend vertically, and
said separator (60) is positioned entirely within the width of said core portion (12) of said radiator (9).

2. A heat exchanging apparatus according to claim 1, wherein the radiator (9) has a core portion (12) composed of plural tubes (10) in parallel with each other and a fin (11) disposed between said adjacent tubes (10), and cooling the cooling water in said core portion (12), and
the condenser (1) has a core portion (4) including a condensing portion (40) for cooling condensing gaseous refrigerant discharged from a compressor of a refrigerating cycle and a supercooling portion (41) for supercooling the liquid refrigerant.

3. A heat exchanging apparatus according to claims 1 and 2, wherein said first header tank (5) and said second header tank (6) are made of materials having a high coefficient of thermal conductivity, which is an identical type as that of said core portion (4) of said condenser (1).

4. A heat exchanging apparatus according to claim 1, wherein said radiator (9) includes a pair of an upper tank (13) and a lower tank (14), and
said cooling fan (18) is fixed to said upper tank (13) and said lower tank (14) of said radiator (9).

5. A heat exchanging apparatus according to claims 1 to 4, wherein said radiator includes a fan shroud (19) for leading cooling air of said cooling fan (18) toward said radiator (9).

6. A heat exchanging apparatus according to claim 5, wherein said fan shroud (19) is fixed to said upper tank (13) and said lower tank (14) of said radiator (9) by stays (19a).

7. A heat exchanging apparatus according to claim 4, wherein said cooling fan (18) is fixed to said upper tank (13) and said lower tank (14) of said radiator (9) with a rubber cushion (22) therebetween.

8. A heat exchanging apparatus according to claim 4, wherein
said condenser (1) is fixed to said upper tank (13) and said lower tank (14) of said radiator (9).

## Patentansprüche

1. Wärmetauscher für ein Fahrzeug mit einem wassergekühlten Motor, umfassend:
einen Kühler (9), der einen Kernbereich (12) aufweist, zum Kühlen des Kühlwassers;
einen Ansaug-Kühllüfter (18), der an der luftstromabwärtigen Seite des Kühlers (9) angeordnet ist, zum Blasen von Luft in Richtung zu dem Kühler (9); und
einen Kondensator (1), der an der luftstromaufwärtigen Seite des Kühlers (9) angeordnet ist, zum Kondensieren von gasförmigem Kühlmittel, das von einem Kompressor eines Kühlzyklus aus abgegeben wird,
wobei der Kondensator (1) aufweist:
einen Kernbereich (4), der aus mehreren Röhrchen (2), die parallel zueinander angeordnet sind, und einer Rippe (3) besteht, die zwischen benachbarten Röhrchen angeordnet ist;
einen ersten Sammelbehälter (5), der mit jedem einen Ende der Röhrchen (2) in Verbindung steht; und
einen zweiten Sammelbehälter (6), der mit jedem anderen Ende der Röhrchen (2) in Verbindung steht,
wobei der Ansaug-Kühllüfter (18) und der Kondensator (1) derart zueinander angeordnet sind, dass die Blasluft von dem Ansaug-Kühllüfter (18) durch im wesentlichen die gesamte äußere Fläche mindestens eines Sammelbehälters von erstem Sammelbehälter (5) und zweitem Sammelbehälter (6) und durch den Kernbereich (4) strömt, **dadurch gekennzeichnet, dass**
ein Gas/Flüssigkeits-Abscheider (60), der in der Nähe eines Sammelbehälters von erstem Sammelbehälter (5) und zweitem Sammelbehälter (6) angeordnet ist,
wobei der Abscheider (60) das in dem Kondensator (1) kondensierte Kühlmittel aufnimmt, das kondensierte Kühlmittel in flüssiges Kühlmittel und in gasförmiges Kühlmittel aufteilt und ausschließlich das flüssige Kühlmittel abführt,
wobei der erste Sammelbehälter (5) und der zweite Sammelbehälter (6) derart angeordnet sind, dass sich ihre Längsrichtungen vertikal erstrecken, und
der Abscheider (60) gänzlich innerhalb der Breite des Kernbereichs (12) des Kühlers (9) angeordnet ist.

2. Wärmetauscher nach Anspruch 1, wobei
der Kühler (9) einen Kernbereich (12) aufweist, der aus mehreren Röhrchen (10) parallel zueinander und einer Rippe (11), die zwischen den benachbarten Röhrchen (10) angeordnet ist, besteht und der das Kühlwasser in dem Kernbereich (12) kühlt; und
der Kondensator (1) einen Kernbereich (4) aufweist, der einen Kondensierungsbereich (40) zum kühlenden Kondensieren des von einem Kompressor eines Kühlzyklus abgegebenen gasförmigen Kühlmittels und einen Überkühlungsbereich (41) zum Überkühlen des flüssigen Kühlmittels aufweist.

3. Wärmetauscher nach Anspruch 1 und 2, wobei der erste Sammelbehälter (5) und der zweite Sammelbehälter (6) aus einem Material mit einem hohen Koeffizienten der Wärmeleitfähigkeit hergestellt sind, das identisch zu demjenigen des Kernbereichs (4) des Kondensator (1) ist.

4. Wärmetauscher nach Anspruch 1, wobei der Kühler (9) ein Paar aus einem oberen Behälter (13) und einem unteren Behälter (14) aufweist und
der Kühllüfter (18) an dem oberen Behälter (13) und dem unteren Behälter (14) des Kühlers (9) befestigt ist.

5. Wärmetauscher nach Anspruch 1 bis 4, wobei der Kühler einen Lüftermantel (19) zur Führung der Kühlluft des Kühllüfters (18) in Richtung zu dem Kühler (9) hin aufweist.

6. Wärmetauscher nach Anspruch 5, wobei der Lüftermantel (19) an dem oberen Behälter (13) und dem unteren Behälter (14) des Kühlers (9) mit Hilfe von Streben (19a) befestigt ist.

7. Wärmetauscher nach Anspruch 4, wobei der Kühllüfter (18) an dem oberen Behälter (13) und dem unteren Behälter (14) des Kühlers (9) mit einem dazwischen liegenden Gummidämpfer (22) befestigt ist.

8. Wärmetauscher nach Anspruch 4, wobei der Kondensator (1) an dem oberen Behälter (13) und dem unteren Behälter (14) des Kühlers (9) befestigt ist.

## Revendications

1. Dispositif d'échange de chaleur destiné à un véhicule comportant un moteur refroidi par eau, comprenant :
un radiateur (9) incluant une partie d'échangeur (12), destiné à refroidir l'eau de refroidissement,
un ventilateur de refroidisseur du type à aspiration (18) disposé du côté aval de l'air dudit radiateur (9) afin de souffler l'air vers ledit radiateur (9), et
un condenseur (1) disposé sur un côté amont de l'air dudit radiateur (9) pour condenser un réfrigérant gazeux, refoulé d'un compresseur d'un cycle de réfrigération,
ledit condenseur (1) comprenant :
une partie d'échangeur (4) composée de plusieurs tubes (2) disposés parallèlement les uns aux autres et une ailette (3) disposée entre lesdits tubes adjacents,
un premier collecteur de tête (5) communiquant avec chaque extrémité desdits tubes (2), et
un second collecteur de tête (6) communiquant avec chaque autre extrémité desdits tubes (2),
dans lequel ledit ventilateur de refroidissement du type à aspiration (18) et ledit condenseur (1) sont positionnés de façon relative de telle manière que l'air de soufflage provenant dudit ventilateur de refroidissement du type à aspiration (18) circule pratiquement sur toute la surface extérieure d'au moins l'un dudit premier collecteur de tête (5) et dudit second collecteur de tête (6) et au travers de ladite partie d'échangeur (4), **caractérisé en ce que**
un séparateur gaz-liquide (60) est disposé de façon adjacente à l'un dudit premier collecteur de tête (5) et dudit second collecteur de tête (6), ledit séparateur (60) recevant le réfrigérant condensé dans ledit condenseur (1), séparant un tel réfrigérant condensé en un réfrigérant liquide et un réfrigérant gazeux, en n'évacuant que ledit réfrigérant liquide,
dans lequel ledit premier collecteur de tête (5) et ledit second collecteur de tête (6) sont disposés de telle manière que les directions longitudinales de ceux-ci s'étendent verticalement, et
ledit séparateur (60) est positionné entièrement dans la largeur de ladite partie d'échangeur (12) dudit radiateur (9).

2. Dispositif d'échange de chaleur selon la revendication 1, dans lequel le radiateur (9) comporte une partie d'échangeur (12) constituée de plusieurs tubes (10) parallèles les uns aux autres et d'une ailette (11) disposée entre lesdits tubes adjacents (10), et refroidissant l'eau de refroidissement dans ladite partie d'échangeur (12), et
le condenseur (1) comporte une partie d'échangeur (4) comprenant une partie de condensation (40) destinée à refroidir un réfrigérant gazeux qui se condense refoulé d'un compresseur d'un cycle de réfrigération et une partie de sur-refroidissement (41) destinée à sur-refroidir le réfrigérant liquide.

3. Dispositif d'échange de chaleur selon les revendications 1 et 2, dans lequel ledit premier collecteur de tête (5) et ledit second collecteur de tête (6) sont faits de matériaux présentant un fort coefficient de conductivité thermique, qui est d'un type identique à celui de ladite partie d'échangeur (4) dudit condenseur (1).

4. Dispositif d'échange de chaleur selon la revendication 1, dans lequel ledit radiateur (9) comprend une paire constituée d'un réservoir supérieur (13) et d'un réservoir inférieur (14), et
ledit ventilateur de refroidissement (18) est fixé audit réservoir supérieur (13) et audit réservoir inférieur (14) dudit radiateur (9).

5. Dispositif d'échange de chaleur selon les revendications 1 à 4, dans lequel ledit radiateur comprend un carénage de ventilateur (19) destiné à conduire l'air de refroidissement dudit ventilateur de refroidissement (18) vers ledit radiateur (9).

6. Dispositif d'échange de chaleur selon la revendication 5, dans lequel ledit carénage de ventilateur (19) est fixé audit réservoir supérieur (13) et audit réservoir inférieur (14) dudit radiateur (9) par des traverses (19a).

7. Dispositif d'échange de chaleur selon la revendication 4, dans lequel ledit ventilateur de refroidissement (18) est fixé audit réservoir supérieur (13) et audit réservoir inférieur (14) dudit radiateur (9) avec un coussin de caoutchouc (22) entre ceux-ci.

8. Dispositif d'échange de chaleur selon la revendication 4, dans lequel ledit condenseur (1) est fixé audit réservoir supérieur (13) et audit réservoir inférieur (14) dudit radiateur (9).
